**Europäisches Patentamt**

**European Patent Office**

**Office européen des brevets**

(19)

(11) Numéro de publication : **0 332 552 B1**

## (12) FASCICULE DE BREVET EUROPEEN

(45) Date de publication du fascicule du brevet :
**07.10.92 Bulletin 92/41**

(51) Int. Cl.$^5$ : **A01D 34/66**

(21) Numéro de dépôt : **89440019.1**

(22) Date de dépôt : **01.03.89**

(54) **Perfectionnement aux machines agricoles pour la récolte.**

(30) Priorité : **04.03.88 FR 8802999**

(43) Date de publication de la demande :
**13.09.89 Bulletin 89/37**

(45) Mention de la délivrance du brevet :
**07.10.92 Bulletin 92/41**

(84) Etats contractants désignés :
**AT BE DE FR GB IT NL**

(56) Documents cités :
**EP-A- 89 257**
**EP-A- 0 188 682**
**EP-A- 0 223 302**
**DE-A- 1 582 350**

(56) Documents cités :
**DE-A- 1 782 826**
**DE-A- 2 524 348**
**DE-U- 8 625 852**
**FR-A- 2 110 911**
**US-A- 2 974 469**
**US-A- 3 267 652**

(73) Titulaire : **KUHN S.A.**
**4, Impasse des Fabriques**
**F-67700 Saverne (FR)**

(72) Inventeur : **Ermacora, Rino**
**5, rue de Monswiller Ottersthal**
**F-67700 Saverne (FR)**

(74) Mandataire : **Andres, Jean-Claude**
**KUHN S.A. 4, Impasse des Fabriques**
**F-67700 Saverne (FR)**

## Description

La présente invention se rapporte à une machine agricole pour la récolte de fourrage comportant un châssis muni d'un timon pour l'accrochage à un tracteur et de roues porteuses qui se déplacent sur le sol latéralement audit tracteur durant le travail, ledit châssis portant un dispositif de coupe et un dispositif de conditionnement et/ou de projection, ainsi que des déflecteurs orientables situés sur son côté arrière.

Une machine de ce genre, connue dans la demande de brevet EP-089 257, peut occuper une position de travail dans laquelle le dispositif de coupe et le dispositif de conditionnement et/ou de projection sont perpendiculaires au sens d'avancement et les déflecteurs sont orientés de telle sorte que le fourrage est rassemblé et tombe sur le sol sensiblement sur le côté droit - vu dans le sens d'avancement - de la largeur du pas de coupe.

Au passage suivant, la position des déflecteurs est modifiée de telle sorte que le fourrage rassemblé tombe sur le sol sensiblement sur le côté gauche de la largeur du pas de coupe.

Avec un tel agencement, on arrive à rapprocher les deux andains formés lors de deux passages successifs. Cet agencement, appliqué à une machine à grande largeur de travail, ne permet toutefois pas de rassembler les deux andains, de sorte qu'ils ne forment plus qu'un seul andain d'une largeur réduite, pouvant être ramassé avec les pick-up classiques des ensileuses les plus courantes.

D'autre part, sur cette machine, le châssis avec le dispositif de coupe et le dispositif de conditionnement et/ou d'accélération est plus éloigné du tracteur lors de chaque deuxième passage pour éviter que les roues de ce dernier n'écrasent le fourrage coupé lors du premier passage. Par conséquent, le conducteur du tracteur doit modifier ses repères à chaque passage.

Par ailleurs, lorsque la machine est davantage éloignée du tracteur, elle a plus tendance à riper vers le côté arrière de celui-ci. De ce fait, la largeur de travail est très irrégulière et le conducteur doit constamment corriger la trajectoire.

Enfin, lorsque la machine est dans la position plus éloignée de l'axe du tracteur, son centre de gravité est proche du côté avant du triangle de sustentation défini par ses deux roues porteuses et le point d'accrochage du timon au tracteur. La stabilité de la machine est par conséquent précaire dans cette position.

La présente invention a pour but de remédier aux inconvénients précités. Elle doit notamment permettre d'une manière simple de rapprocher davantage le fourrage déposé lors de deux passages successifs. Elle doit aussi faciliter le travail du conducteur et conserver une bonne stabilité de la machine lors de chaque passage.

A cet effet, une importante caractéristique de l'invention consiste en ce que la machine peut être transposée de sa première position de travail dans une deuxième position de travail dans laquelle le dispositif de coupe et le dispositif de conditionnement et/ou de projection forment un angle aigu avec une droite perpendiculaire au sens d'avancement et des angles aigus avec les axes des roues porteuses qui ont sensiblement la même valeur que l'angle précité.

Grâce à cette disposition, au second passage, le fourrage est éjecté obliquement vers le côté où se trouve le fourrage du passage précédent. Le déplacement latéral du fourrage n'est donc plus uniquement assuré par les déflecteurs. Grâce à cette projection oblique, le déplacement obtenu est beaucoup plus important. Le fourrage peut ainsi au moins partiellement être déplacé au-delà de la largeur du pas de coupe, en vue de le rapprocher davantage du fourrage déposé lors du passage précédent. De plus, le risque d'accumulation et de bourrage au niveau des déflecteurs est considérablement réduit.

D'autre part, la caractéristique revendiquée permet de garder constamment le même écartement latéral - vu dans le sens d'avancement - entre le tracteur et la machine. De ce fait, le tracteur peut se déplacer, lors de chaque passage, à proximité du fourrage encore sur pied et la machine n'a pas trop tendance à riper vers le côté arrière du tracteur.

Dans cette deuxième position, le centre de gravité de la machine est déplacé vers l'arrière avec le dispositif de coupe et le dispositif de conditionnement et/ou de projection. Il demeure ainsi correctement à l'intérieur du triangle de sustentation de la machine. Celle-ci conserve donc aussi une bonne stabilité dans sa deuxième position de travail.

La machine selon l'invention comporte avantageusement des moyens de transposition constitués par des vérins hydrauliques agissant simultanément sur le châssis avec le dispositif de coupe et le dispositif de conditionnement et/ou de projection et sur les supports des roues porteuses. Les déflecteurs situés à l'arrière du châssis peuvent aussi être réglables hydrauliquement, simultanément avec le châssis et les roues porteuses.

Conformément à une autre caractéristique de l'invention, le dispositif de conditionnement et/ou de projection se compose d'un rotor de conditionnement et d'un rotor de projection sensiblement horizontaux qui s'étendent pratiquement sur toute la largeur du dispositif de coupe. Ces deux rotors peuvent ainsi conditionner et éjecter uniformément l'ensemble du fourrage coupé.

Selon une autre caractéristique de l'invention, le rotor de projection comporte sur sa périphérie des dents courbées dans la direction opposée à son sens de rotation. Ces dents pénètrent partiellement dans la trajectoire des fléaux du rotor de conditionnement. Lesdites dents agissent ainsi à la manière de râteaux et interceptent la totalité du fourrage conditionné. Par conséquent, il n'y a pas de perte de fourrage entre les deux rotors. Le dispositif selon l'invention effectue donc un travail d'andainage de très bonne qualité.

Il est également avantageux que le rotor de projection soit entraîné en rotation à une vitesse supérieure à celle du rotor de conditionnement. Il provoque ainsi une accélération du fourrage en vue d'obtenir un important déplacement de celui-ci.

D'autres caractéristiques et avantages de l'invention ressortiront des revendications et de la description ci-après d'un exemple de réalisation non limitatif de l'invention, avec référence aux dessins annexés dans lesquels :

– La figure 1 représente une vue de dessus d'une machine selon l'invention dans la première position de travail,

– La figure 2 représente une vue de dessus de la machine dans la deuxième position de travail,

– La figure 3 représente une vue de détail du montage d'une roue porteuse,

– La figure 4 représente une vue de détail du dispositif permettant de définir les positions de la machine,

– La figure 5 représente une coupe selon le plan V-V de la figure 1.

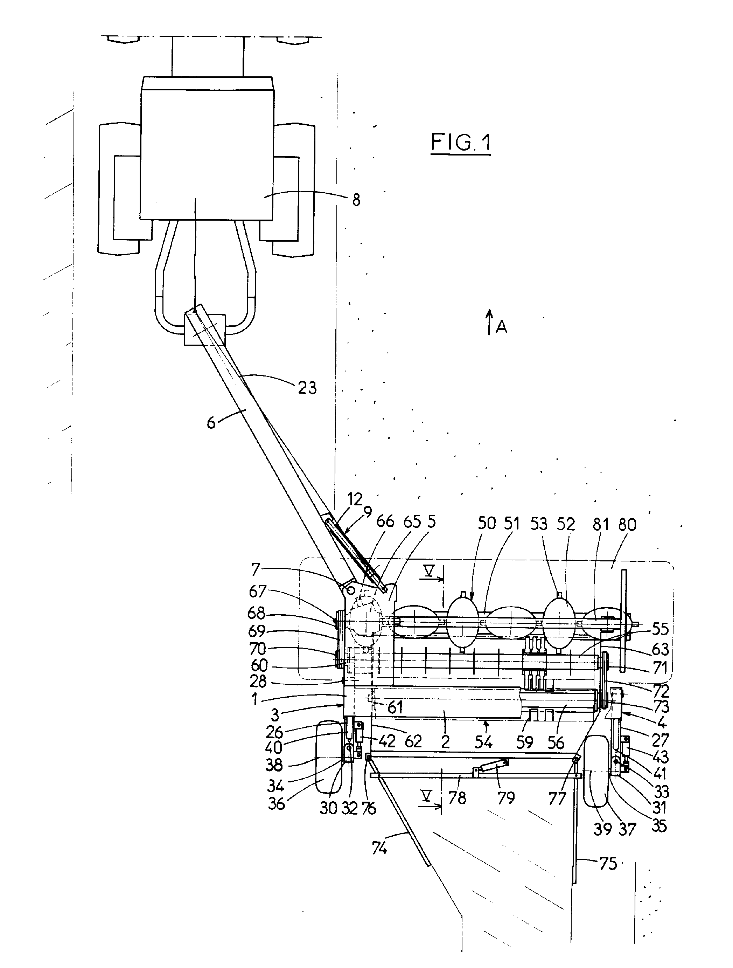

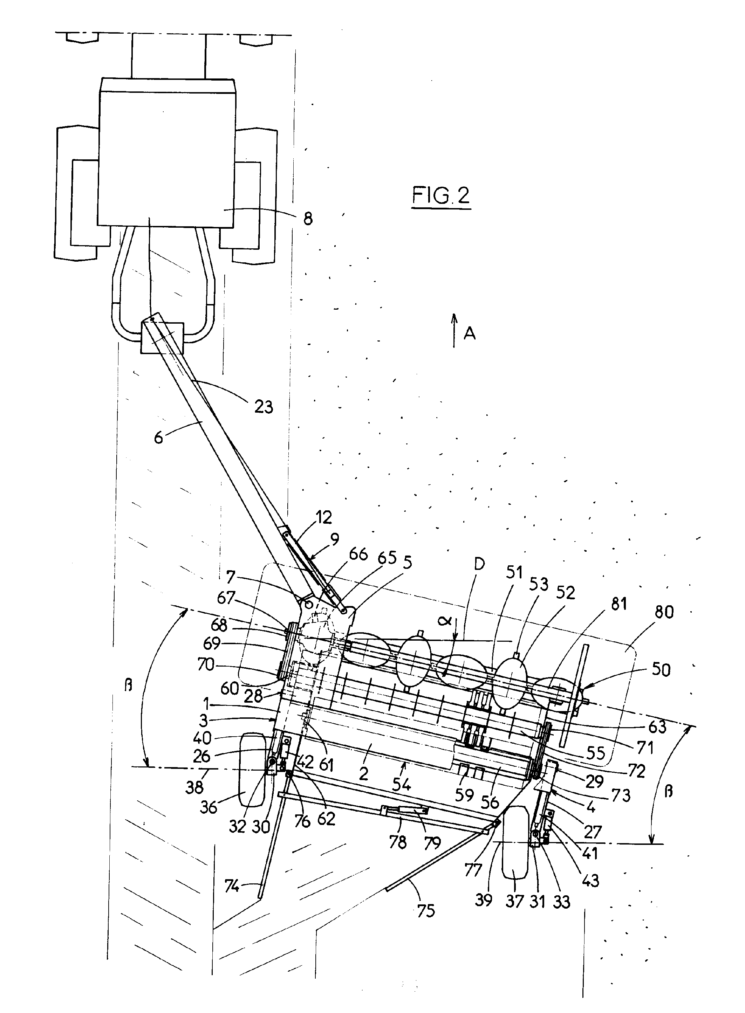

Telle qu'elle est représentée sur les figures 1 et 2, la machine selon l'invention comporte un châssis (1) présentant une poutre horizontale (2) avec à chacune de ses extrémités une jambe (3, 4) dirigée vers le bas. Ladite poutre horizontale (2) comporte une section (5) dirigée vers l'avant, à laquelle est articulé un timon (6) au moyen d'un axe (7) pratiquement vertical. L'extrémité avant de ce timon (6) peut être reliée à un tracteur (8) servant à déplacer la machine dans la direction (A) et à l'animer durant le travail.

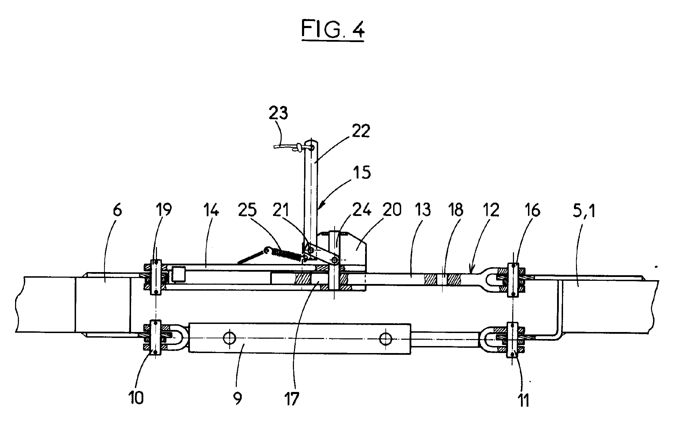

Un vérin hydraulique (9) est articulé sur ledit timon (6) et sur la section (5) du châssis (1) au moyen d'axes (10 et 11). Il est avantageusement à double effet et est relié à la prise hydraulique du tracteur. L'actionnement de ce vérin (9) permet de modifier la position du châssis (1) par rapport au timon (6). Entre ce dernier et le châssis (1) est également prévu un dispositif (12) permettant de définir la position dudit châssis par rapport au timon (6). Comme cela ressort notamment de la figure 4, ce dispositif (12) est constitué par une barre (13) coulissant dans une glissière (14) et un verrou (15). La barre (13) est articulée au châssis (1) au moyen d'un axe (16) et comporte un orifice oblong (17) et un trou cylindrique (18). La glissière (14) est articulée au timon (6) par l'intermédiaire d'un axe (19). Cette glissière (14) se compose de deux plats superposés entre lesquels peut se déplacer la barre (13). Les deux plats précités sont en sus reliés sur une partie de leur longueur par deux parois latérales (20), de manière à former un fourreau de guidage de la barre (13). Sur ces deux parois (20) est articulé le verrou (15) au moyen d'un axe horizontal (21). Il présente un organe de manoeuvre (22) auquel est relié un câble de commande (23) s'étendant jusqu'au poste de conduite. Il présente en sus un pêne (24) qui est dirigé vers le bas et s'étend soit dans l'orifice oblong (17), soit dans le trou cylindrique (18) de la barre (13). Un ressort de rappel (25) tire sur le verrou (15) de manière à maintenir le pêne (24) dans les orifices prévus dans la barre (13). Les axes d'articulation (16 et 19) de ce dispositif (12) sont avantageusement alignés avec les axes d'articulation (10 et 11) du vérin hydraulique (9).

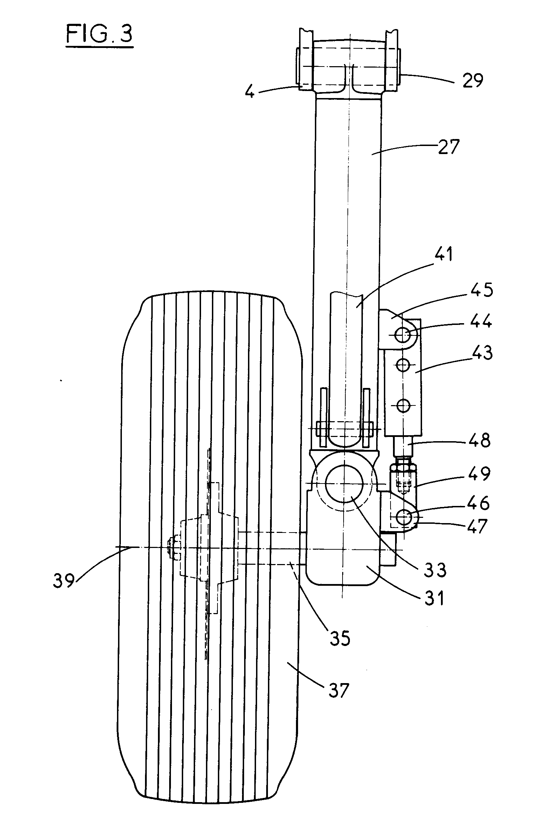

Sur chaque jambe latérale (3 et 4) du châssis (1) est articulé un bras (26, 27) au moyen d'un axe sensiblement horizontal (28, 29). Ces bras (26, 27) sont dirigés vers l'arrière et comportent des pivots (30, 31) articulés au moyen d'axes (32, 33) sensiblement verticaux (voir figure 3). Chacun de ces pivots (30, 31) comporte une fusée (34, 35) sur laquelle est montée une roue porteuse (36, 37) de manière à pouvoir tourner autour d'un axe sensiblement horizontal (38, 39). Ces deux roues (36, 37) se déplacent sur le sol et portent la machine. Elles se situent en arrière du châssis (1) et sont éloignées l'une de l'autre de sorte que le centre de gravité de la machine se situe correctement à l'intérieur du triangle de sustentation formé par ces deux roues (36, 37) et le point d'appui du timon (6) sur le tracteur (8). Entre chacun de ces bras (26, 27) et le châssis (1) de la machine est prévu un vérin hydraulique (40, 41) actionné à partir du tracteur. Ces vérins (40, 41) permettent de déplacer les bras (26 et 27) autour de leurs axes d'articulation (28 et 29) sur le châssis (1) en vue de modifier la position de ce dernier par rapport au sol.

Les pivots (30, 31) qui portent les roues (36, 37) sont en sus reliés aux bras (26, 27) au moyen de vérins hydrauliques (42, 43) à double effet, alimentés et commandés à partir du tracteur (8). Ces vérins (42, 43) sont disposés à côté des bras (26 et 27). Ils sont articulés au moyen d'axes (44) sensiblement verticaux sur des pattes (45) solidaires des bras (26, 27) et au moyen d'axes (46) également sensiblement verticaux sur des pattes (47) solidaires des pivots (30, 31). L'actionnement de ces vérins (42, 43) permet de modifier la position des roues porteuses (36, 37) par rapport au châssis (1) de la machine. La longueur de la tige (48) de chacun de ces vérins (42, 43) est avantageusement réglable dans le but de pouvoir déterminer avec précision la position des pivots (30, 31) et des roues porteuses (36, 37). Pour cela, la tige (48) comporte à son extrémité un embout (49) traversé par l'axe d'articulation (46). Cet embout (49) est vissé sur l'extrémité de la tige (48) qui est pourvue d'un filetage. En tournant ladite tige sur elle-même, on peut modifier sa pénétration dans l'embout (49). Le blocage entre ces deux pièces est assuré au moyen d'un contre-écrou. Par cette manoeuvre, on modifie la distance entre les deux axes d'articulation (44 et 46) du vérin hydraulique (42, 43). La position des roues porteuses (36, 37) pourrait aussi être définie au moyen de butées réglables prévues entre les bras (26, 27) et leurs pivots (30, 31).

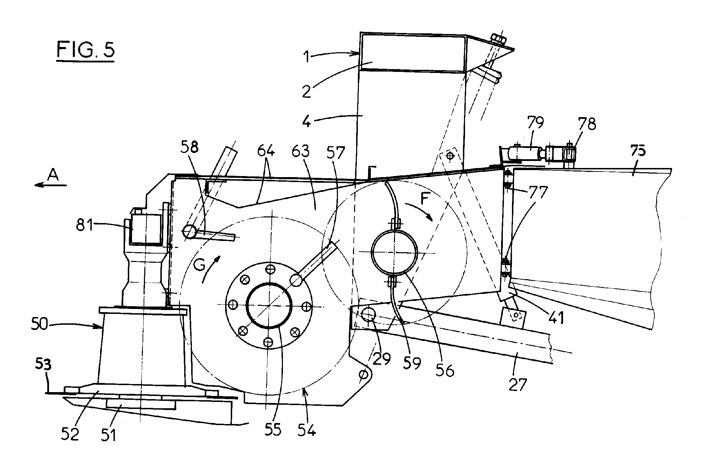

Le châssis (1) porte par ailleurs un dispositif de coupe (50) comportant un carter de forme allongée (51) portant plusieurs disques (52) munis de couteaux (53). Ledit carter renferme des moyens de transmission assurant l'entraînement en rotation des disques (52) en vue de la coupe du fourrage. Ledit châssis (1) porte également un dispositif de conditionnement et/ou de projection (54) situé à l'arrière du dispositif de coupe (50). Il est plus éloigné du sol que ledit dispositif de coupe (50). Il se compose d'un rotor de conditionnement (55) et d'un rotor de projection (56). Le rotor de conditionnement (55) est disposé horizontalement et s'étend pratiquement sur toute la largeur du dispositif de coupe (50). Sa périphérie est munie de fléaux articulés (57) qui peuvent coopérer avec des doigts (58) immobiles. Le rotor de projection (56) se situe à proximité immédiate derrière le rotor de conditionnement (55). Il est sensiblement parallèle à ce dernier et s'étend également pratiquement sur toute la largeur du dispositif de coupe (50). Sa périphérie est équipée de dents (59) en acier à ressort. Ces dents sont placées en lignes et sont légèrement courbées dans la direction opposée au sens de rotation (F) du rotor (56) (voir figure 5).

Les deux rotors (55 et 56) sont logés à chacune de leurs extrémités dans des paliers (60 et 61) de manière à pouvoir tourner autour de leurs axes longitudinaux respectifs. Ces paliers (60 et 61) sont eux-mêmes fixés sur des flasques latéraux (62 et 63) liés au châssis (1). Les deux flasques (62 et 63) sont reliés entre eux par un capot (64) qui couvre les deux rotors (55 et 56). Ce capot (64) n'a pas été représenté sur les figures 1 et 2 afin de préserver leur clarté. Au flasque gauche (62) - vu dans le sens d'avancement (A) - est lié un carter de renvoi (65). Ce carter (65) comporte un arbre d'entrée (66) qui est relié à l'arbre de prise de force du tracteur par l'intermédiaire d'arbres à cardans. Il comporte aussi un premier arbre de sortie qui s'étend vers le bas jusque dans le carter (51) en vue de l'entraînement en rotation des disques (52) et un second arbre de sortie (67) portant une poulie (68). Celle-ci est reliée au moyen de courroies (69) à une autre poulie (70) prévue à l'extrémité du rotor de conditionnement (55) et entraîne celui-ci en rotation dans le sens de la flèche (G) sur la figure 5. Ce rotor (55) comporte à son autre extrémité une poulie (71) sur laquelle passent des courroies (72). Celles-ci passent également sur une poulie (73) prévue à l'extrémité du rotor de projection (56) en vue de l'entraînement de ce dernier dans le sens de la flèche (F). Le diamètre de la poulie (73) du rotor de projection (56) est inférieur à celui de la poulie motrice (71) de sorte que la vitesse de rotation du rotor de projection (56) est supérieure à celle du rotor de conditionnement (55). Ces deux rotors (55 et 56) tournent dans le même sens (flèches F et G sur la figure 5).

Sur chaque flasque (62 et 63) est articulé un déflecteur (74 et 75) en forme de panneau essentiellement rectangulaire. Ces articulations sont réalisées au moyen d'axes (76 et 77) sensiblement verticaux. Ces déflecteurs (74 et 75) constituent pratiquement des prolongements desdits flasques. Ils peuvent être déplacés et arrêtés dans différentes positions. Comme cela ressort notamment des figures 1 et 2, les deux déflecteurs (74 et 75) sont reliés entre eux au moyen d'une tringle (78). Un vérin hydraulique (79) à double effet est articulé à la fois sur cette tringle (78) et le capot (64). Ce vérin hydraulique (79) est alimenté et actionné à partir du tracteur. Il permet de modifier la position des deux déflecteurs (74 et 75).

Ce vérin hydraulique (79) qui déplace les déflecteurs (74 et 75), les vérins hydrauliques (42 et 43) qui déplacent les roues porteuses (36 et 37) et le vérin hydraulique (9) qui déplace le châssis (1) par rapport au timon (6) sont reliés entre eux au moyen de conduits hydrauliques, de sorte qu'ils puissent être actionnés simultanément.

Le dispositif de coupe (50) peut être entouré d'un protecteur (80) avec une armature métallique. Il est porté par un tube (81) qui est disposé au-dessus du dispositif de coupe (50) et qui renforce aussi ce dernier.

Durant le travail, la machine dépasse latéralement le tracteur (8) et est tirée dans la direction (A). Les disques (52) sont alors entraînés en rotation et coupent le fourrage (par exemple de l'herbe) qui est encore sur pied. Ce fourrage est alors happé par les fléaux (57) du rotor de conditionnement (55) qui font éclater la pellicule qui enveloppe les tiges de manière à accélérer le séchage ultérieur. Le fourrage ainsi conditionné parvient au rotor de projection (56) qui le propulse vers l'arrière entre les deux déflecteurs (74 et 75).

Dans la première position de travail qui est représentée sur la figure 1, le dispositif de coupe (50) et le dispositif de conditionnement et/ou de projection (54) sont sensiblement perpendiculaires au sens d'avancement (A). Le châssis (1) et lesdits dispositifs (50 et 54) sont arrêtés dans cette position au moyen du vérin hydraulique (9) liant le châssis (1) et le timon (6) et du dispositif de définition de la position (12). Le pêne (24) du verrou (15) de ce dispositif (12) est alors en butée contre une des extrémités de l'orifice oblong (17). Dans cette position, les axes (38 et 39) des deux roues (36 et 37) qui portent la machine sont sensiblement parallèles aux dispositifs (50 et 54), respectivement pour la coupe et le conditionnement et/ou la projection. De plus, les deux déflecteurs (74 et 75) sont réglés de telle sorte que le déflecteur (75) situé sur le côté droit - vu dans la direction d'avance (A) - soit pratiquement parallèle à cette direction d'avance (A) et que le déflecteur (74) situé sur le côté gauche soit dirigé obliquement vers le côté droit. Le fourrage provenant du dispositif de conditionnement et/ou de projection (54) est ainsi rassemblé et dirigé vers le côté droit du pas de coupe par les déflecteurs (74 et 75). Il retombe alors sur le sol sous la forme d'un andain bien aéré et bien structuré.

Pour le passage suivant, la machine est amenée dans la seconde position de travail représentée sur la figure 2. Dans cette position, le dispositif de coupe (50) et le dispositif de conditionnement et/ou de projection (54) forment un angle aigu (α) avec une droite (D) perpendiculaire au sens d'avancement (A) et des angles aigus (β) avec les axes (38 et 39) des roues porteuses (36 et 37). Ces angles (α et β) ont sensiblement la même valeur. Celle-ci est d'environ 12°. Grâce à ces mêmes valeurs, la position latérale de la machine par rapport au tracteur ne varie pas lors de la transposition de la première dans la seconde position et vice versa.

Ladite position inclinée du dispositif de coupe (50) et du dispositif de conditionnement et/ou de projection (54) est obtenue par un déplacement du châssis (1) qui les porte autour de l'axe d'articulation (7) avec le timon (6). Pour cela, il y a lieu d'actionner le vérin hydraulique (9). Celui-ci pousse le châssis (1) vers l'arrière et provoque un glissement de la barre (13) dans la glissière (14) du dispositif (12) qui permet de définir la position du châssis (1). Ce glissement a lieu jusqu'à ce que le pêne (24) du verrou (15) arrive en butée contre l'autre extrémité de l'orifice oblong (17) dans la barre (13). A ce moment-là, le châssis (1) est bloqué dans la deuxième position.

Le déplacement des axes (38 et 39) des roues porteuses (36 et 37) du châssis (1) est obtenu au moyen des vérins hydrauliques (42 et 43). Lorsque ceux-ci s'allongent, ils font pivoter les pivots extérieurs (30 et 31) des bras (26 et 27) avec lesdites roues (36 et 37) autour de leurs axes d'articulation (32 et 33). Ces mêmes vérins (42 et 43) peuvent assurer le blocage des roues (36 et 37) dans les différentes positions.

Dans cette deuxième position de travail, les déflecteurs (74 et 75) sont orientés vers le côté gauche de la machine - vu dans le sens d'avancement (A) -. Pour cela, ils sont déplacés autour de leurs axes d'articulation (76 et 77). Ce déplacement est assuré au moyen du vérin hydraulique (79) qui pousse la tringle (78) vers le même côté gauche. Ce vérin (79) bloque aussi les déflecteurs (74 et 75) dans les différentes positions.

Pour plus de commodité, les déplacements précités du châssis (1) des roues porteuses (36 et 37) et des déflecteurs (74 et 75) s'opèrent en même temps.

Dans cette deuxième position de travail, le tracteur (8) enjambe l'andain déposé lors du passage précédent. Le fourrage coupé et conditionné est intégralement repris par le rotor de projection (56). Celui-ci accélère le fourrage et le projette suivant une direction oblique par rapport au sens d'avancement (A). Grâce à cette direction oblique, la distance sur laquelle est projeté le fourrage peut être assez importante. Ce fourrage qui est en sus rassemblé par les déflecteurs (74 et 75) retombe alors sur le sol sur le côté gauche de la machine et de préférence à côté de l'andain formé lors du passage précédent. Le fourrage coupé en deux passages successifs se retrouve pratiquement sur un seul andain, de manière à pouvoir être ramassé avec les pick-up les plus répandus.

Lors de ce déplacement du fourrage vers la gauche, le rotor de projection (56) et les déflecteurs (74 et 75) dégagent un espace suffisamment large pour le passage du tracteur lors du tour suivant, pour lequel la machine est ramenée dans la position désignée comme étant la première position de travail. Cette transposition s'effectue à nouveau en actionnant les différents vérins hydrauliques (9, 42, 43 et 79) qui déplacent simultanément le châssis (1), les roues porteuses (36 et 37) et les déflecteurs (74 et 75).

La machine selon l'invention peut également être transposée dans une position de transport (non représentée) dans laquelle elle est alignée avec le tracteur (8). Pour cela, il faut lever le châssis (1) de la machine au moyen des vérins hydrauliques (40 et 41), retirer le pêne (24) du verrou (15) de l'orifice oblong (17) au moyen du câble (23) et actionner le vérin (9) de sorte qu'il ramène le châssis (1) de la machine vers le timon (6). Les axes (38 et 39) des roues (36 et 37) sont alors parallèles au châssis (1). Lorsque la machine est tractée, les roues (36 et 37) se placent dans la direction d'avancement et font pivoter toute la machine autour de son point d'accrochage au tracteur (8) jusqu'à ce qu'elle se situe derrière celui-ci. Dans cette position, le pêne (24) du verrou (15) s'engage dans le trou (18) prévu dans la barre (13) sous l'effet de la traction du ressort (25). Ledit pêne bloque alors la machine dans la position de transport. Pour revenir dans la position de travail, il suffit de déverrouiller la barre (13) et d'actionner le vérin (9) en sens contraire.

Il est bien évident que l'invention n'est pas limitée au mode de réalisation tel que décrit et représenté sur les dessins annexés, des modifications restent possibles notamment du point de vue de la constitution des divers éléments ou par substitution d'équivalents techniques, sans pour autant sortir du domaine de protection tel que défini dans les revendications. Sur la machine selon l'invention, on pourra par exemple remplacer le rotor à fléaux par des rouleaux presseurs ou même supprimer la fonction conditionnement entre la barre de coupe et le rotor de projection.

## Revendications

1. Machine agricole pour la récolte de fourrage comportant un châssis (1) muni d'un timon (6) pour l'accrochage à un tracteur (8) et de roues porteuses (36, 37) qui se déplacent sur le sol latéralement audit tracteur durant le travail, lequel châssis porte un dispositif de coupe (50) et un dispositif de conditionnement et/ou de projection (54), ainsi que des déflecteurs orientables (74, 75) situés sur son côté arrière, cette machine pouvant occuper une position de travail dans laquelle le dispositif de coupe et le dispositif de conditionnement et/ou de projection sont sensiblement perpendiculaires au sens d'avancement, caractérisée par le fait qu'elle peut être transposée dans une seconde position de travail dans laquelle le dispositif de coupe (50) et le dispositif de conditionnement et/ou de projection (54) forment un angle aigu (α) avec une droite (D) perpendiculaire au sens d'avancement (A) et des angles aigus (β) avec les axes (38 et 39) des roues porteuses (36 et 37), lesquels angles (β) ont sensiblement la même valeur que l'angle (α) précité.

2. Machine agricole selon la revendication 1, caractérisée par le fait que la valeur des angles (α et β) est d'environ 12°.

3. Machine agricole selon la revendication 1 ou 2, caractérisée par le fait qu'elle comporte des moyens de transposition constitués par des vérins hydrauliques (9, 42 et 43) disposés respectivement entre le châssis (1) et le timon (6) et entre le châssis (1) et les roues (36 et 37).

4. Machine agricole selon la revendication 3, caractérisée par le fait que les bras (26 et 27) qui portent les roues (36 et 37) comportent des pivots extérieurs (30, 31) qui sont articulés autour d'axes sensiblement verticaux (32 et 33) et qui sont déplaçables au moyen des vérins hydrauliques (42 et 43).

5. Machine agricole selon la revendication 3 ou 4, caractérisée par le fait que chaque vérin (42, 43) comporte une tige (48) coopérant avec un embout (49) en vue du réglage de sa longueur.

6. Machine agricole selon l'une quelconque des revendications précédentes, caractérisée par le fait que le vérin (9) entre le timon (6) et le châssis (1) avec le dispositif de coupe (50) et le dispositif de conditionnement et/ou de projection (54) et les vérins (42 et 43) qui déplacent les roues porteuses (36 et 37) agissent simultanément.

7. Machine agricole selon l'une quelconque des revendications précédentes, caractérisée par le fait qu'un dispositif de définition de position (12) est articulé sur le timon (6) et le châssis (1) et que ses axes d'articulation (19 et 16) s'étendent dans le prolongement des axes d'articulation (10 et 11) du vérin (9).

8. Machine agricole selon l'une quelconque des revendications précédentes, caractérisée par le fait que les déflecteurs (74, 75) sont réglables hydrauliquement, simultanément avec le dispositif de coupe (50) et le dispositif de conditionnement et/ou de projection (54) et les pivots extérieurs (30, 31) des bras (26, 27) des roues porteuses (36, 37).

9. Machine agricole selon la revendication 8, caractérisée par le fait que les déflecteurs (74, 75) sont reliés entre eux au moyen d'une tringle (78) et qu'un vérin de réglage (79) est connecté à ladite tringle et à un capot (64) relié au châssis (1).

10. Machine agricole selon l'une quelconque des revendications précédentes, caractérisée par le fait que le dispositif de conditionnement et/ou de projection (54) se compose d'un rotor de conditionnement (55) et d'un rotor de projection (56) sensiblement horizontaux et s'étendant pratiquement sur toute la largeur du dispositif de coupe (50).

11. Machine agricole selon la revendication 10, caractérisée par le fait que le rotor de projection (56) se situe à proximité immédiate derrière le rotor de conditionnement (55).

12. Machine agricole selon la revendication 10 ou 11, caractérisée par le fait que le rotor de conditionnement (55) et le rotor de projection (56) sont parallèles.

13. Machine agricole selon l'une quelconque des revendications 10 à 12, caractérisée par le fait que le rotor de conditionnement (55) et le rotor de projection (56) sont entraînés dans le même sens de rotation (F, G).

14. Machine agricole selon l'une quelconque des revendications 10 à 13, caractérisée par le fait que le rotor de projection (56) comporte sur sa périphérie des dents (59) qui sont légèrement courbées dans la direction opposée au sens de rotation (F).

15. Machine agricole selon l'une quelconque des revendications 10 à 14, caractérisée par le fait que les dents (59) du rotor de projection (56) pénètrent partiellement dans la trajectoire des fléaux (57) du rotor de conditionnement (55).

16. Machine agricole selon l'une quelconque des revendications 10 à 15, caractérisée par le fait que la vitesse de rotation du rotor de projection (56) est supérieure à celle du rotor de conditionnement (55).

**Patentansprüche**

1. Landmaschine zum Ernten von Futter mit einem Tragrahmen (1), der mit einer Deichsel (6) für den Anbau an einen Antriebsschlepper (8) und mit Laufrädern (36, 37) versehen ist, die sich während der Arbeit seitlich vom Antriebsschlepper versetzt auf dem Boden fortbewegen, welcher Tragrahmen eine Schneidvorrichtung (50) und eine Grasknick- und/oder Auswerfvorrichtung (54) ebenso wie verstellbare, an seiner Hinterseite angeordnete Abweiser (74, 75) trägt, wobei die Maschine eine Arbeitsstellung einnehmen kann, in der die Schneidvorrichtung und die Grasknick- und/oder Auswerfvorrichtung im wesentlichen senkrecht zur Fortbewegungsrichtung sind, dadurch gekennzeichnet, dass die Maschine in eine zweite Arbeitsstellung gebracht werden kann, in der die Schneidvorrichtung (50) und die Grasknick- und/oder Auswerfvorrichtung (54) einen spitzen Winkel ($\alpha$) mit einer zur Fortbewegungsrichtung (A) senkrechten Geraden (D) und spitze Winkel ($\beta$) mit den Achsen (38 und 39) der Laufräder (36 und 37) bilden, welche Winkel ($\beta$) im wesentlichen den gleichen Wert haben wie der vorgenannte Winkel ($\alpha$).

2. Landmaschine nach Anspruch 1, dadurch gekennzeichnet, dass der Wert der Winkel ($\alpha$ und $\beta$) etwa 12° ist.

3. Landmaschine nach Anspruch 1 oder 2, dadurch gekennzeichnet, dass sie Verstellmittel aufweist, die aus zwischen dem Tragrahmen (1) und der Deichsel (6) und zwischen dem Tragrahmen (1) und den Rädern (36 und 37) angeordneten Hydraulikzylindern (9, 42 und 43) bestehen.

4. Landmaschine nach Anspruch 3, dadurch gekennzeichnet, dass die Arme (26 und 27), die die Räder (36 und 37) tragen, äussere Gelenkstütze (30, 31) umfassen, die um im wesentlichen vertikale Achsen (32 und 33) angelenkt und die mittels der Hydraulikzylinder (42 und 43) verstellbar sind.

5. Landmaschine nach Anspruch 3 oder 4, dadurch gekennzeichnet, dass jeder Zylinder (42, 43) eine Stange (48) aufweist, die mit einem Ansatzstück (49) zur Verstellung ihrer Länge zusammenarbeitet.

6. Landmaschine nach irgend einem der vorhergehenden Ansprüche, dadurch gekennzeichnet, dass der Zylinder (9) zwischen der Deichsel (6) und dem Tragrahmen (1) mit der Schneidvorrichtung (50) und der Grasknick- und /oder Auswerfvorrichtung (54) und die Zylinder (42 und 43) zur Verstellung der Laufräder (36 und 37) gleichzeitig wirken.

7. Landmaschine nach irgend einem der vorhergehenden Ansprüche, dadurch gekennzeichnet, dass eine Vorrichtung zur Festlegung der Stellung (12) an der Deichsel (6) und dem Tragrahmen (1) angelenkt ist und dass ihre Gelenkachsen (19 und 16) sich in der Verlängerung der Gelenkachsen (10 und 11) des Zylinders (9) erstrecken.

8. Landmaschine nach irgend einem der vorhergehenden Ansprüche, dadurch gekennzeichnet, dass die Abweiser (74, 75) gleichzeitig mit der Schneidvorrichtung (50) und der Grasknick- und/oder Auswerfvorrichtung (54) und den äusseren Gelenkstütze (30, 31) der Arme (26, 27) der Laufräder (36, 37) hydraulisch verstellbar sind.

9. Landmaschine nach Anspruch 8, dadurch gekennzeichnet, dass die Abweiser (74, 75) miteinander mittels einer Stange (78) verbunden sind und dass ein Verstellzylinder (79) mit der Stange und einer mit dem Tragrahmen (1) verbundenen Haube (64) verbunden ist.

10. Landmaschine nach irgend einem der vorhergehenden Ansprüche, dadurch gekennzeichnet, dass die Grasknick- und /oder Auswerfvorrichtung (54) einen Knickrotor (55) und einen Auswerfrotor (56) umfasst, die im wesentlichen horizontal sind und sich praktisch über die ganze Breite der Schneidvorrichtung (50) erstrecken.

11. Landmaschine nach Anspruch 10, dadurch gekennzeichnet, dass der Auswerfrotor (56) in unmittelbarer Nähe hinter dem Knickrotor (55) angeordnet ist.

12. Landmaschine nach Anspruch 10 oder 11, dadurch gekennzeichnet, dass der Knickrotor (55) und der Auswerfrotor (56) parallel sind.

13. Landmaschine nach irgend einem der Ansprüche 10 bis 12, dadurch gekennzeichnet, dass der Knickrotor (55) und der Auswerfrotor (56) im gleichen Drehsinn (F, G) angetrieben werden.

14. Landmaschine nach irgend einem der vorhergehenden Ansprüche 10 bis 13, dadurch gekennzeichnet, dass der Auswerfrotor (56) an seinem Umfang Zähne (59) aufweist, die leicht in der der Drehrichtung (F) entgegengesetzten Richtung gebogen sind.

15. Landmaschine nach irgend einem der Ansprüche 10 bis 14, dadurch gekennzeichnet, dass die Zähne (59) des Auswerfrotors (56) teilweise in die Bahn der Flegel (57) des Knickrotors (55) eindringen.

16. Landmaschine nach irgend einem der Ansprüche 10 bis 15, dadurch gekennzeichnet, dass die Rotationsgeschwindigkeit des Auswerfrotors (56) höher ist als die des Knickrotors (55).

## Claims

1. Agricultural machine for harvesting crop comprising a frame (1) provided with a drawbar (6) for the hitching to a tractor vehicle (8) and with carrying wheels (36, 37) which displace on the soil laterally to the tractor vehicle during work, said frame is equipped with a cutting device (50) and a conditioning and/or throwing device (54) and with adjustable deflectors (74, 75) located on its rear side, this machine which can be in a work position where the cutting device and the conditioning and/or throwing device are substantially perpendicular to the direction of advance, characterized in that it may be transposed in a second work position where the cutting device (50) and the conditioning and/or throwing device (54) form an acute angle ($\alpha$) with a line (D) perpendicular to the direction of advance (A) and acute angles ($\beta$) with the axes (38 and 39) of the carrying wheels ((36 and 37), said angles ($\beta$) having substantially the same value as the aforementioned angle ($\alpha$).

2. Agricultural machine according to claim 1, characterized in that the value of the angles ($\alpha$ and $\beta$) is about 12°.

3. Agricultural machine according to claim 1 or 2, characterized in that it comprises adjusting means constituted by hydraulic jacks (9, 42 and 43) arranged respectively between the frame (1) and the drawbar (6) and between the frame (1) and the wheels (36 and 37).

4. Agricultural machine according to claim 3, characterized in that the arms (26 and 27) carrying the wheels (36 and 37) comprise outer pivots (30, 31) which are articulated around substantially vertical axes (32 and 33) and can be displaced by the means of the hydraulic jacks (42 and 43).

5. Agricultural machine according to claim 3 or 4, characterized in that each jack (42, 43) comprises a rod (48) cooperating with a tip (49) for the adjustment of its length.

6. Agricultural machine according to anyone of the preceding claims, characterized in that the jack (9) located between the drawbar (6) and the frame (1) with the cutting device (50) and the conditioning and/or throwing device (54) and the jacks (42 and 43) which displace the carrying wheels (36 and 37) act simultaneously.

7. Agricultural machine according to anyone of the preceding claims, characterized in that a device (12) for defining the position is articulated on the drawbar (6) and the frame (1) and that its axes of articulation (19 and 16) extend in the continuation of the axes of articulation (10 and 11) of the jack (9).

8. Agricultural machine according to anyone of the preceding claims, characterized in that the deflectors (74, 75) can be adjusted hydraulically, together with the cutting device (50) and the conditioning and/or throwing device (54) and the outer pivots (30, 31) of the arms (26, 27) of the carrying wheels (36, 37).

9. Agricultural machine according to claim 8, characterized in that the deflectors (74, 75) are connected one to the other by the means of a rod (78) and that an adjustment jack (79) is connected to said rod and to a cap (64) connected to the frame (1).

10. Agricultural machine according to anyone of the preceding claims, characterized in that the conditioning and/or throwing device (54) is made of a conditioning rotor (55) and of a throwing rotor (56) which are substantially horizontal and extend substantially over the entire width of the cutting device (50).

11. Agricultural machine according to claim 10, characterized in that the throwing rotor (56) is located immediately behind the conditioning rotor (55).

12. Agricultural machine according to claim 10 or 11, characterized in that the conditioning rotor (55) and the throwing rotor (56) are parallel one to the other.

13. Agricultural machine according to anyone of claims 10 to 12, characterized in that the conditioning rotor (55) and the throwing rotor (56) are driven in the same direction of rotation (F, G).

14. Agricultural machine according to anyone of claims 10 to 13, characterized in that the throwing rotor (56) is provided on its periphery with teeth (59) which are slightly curved in the direction opposite to the direction of rotation (F).

15. Agricultural machine according to anyone of claims 10 to 14, characterized in that the teeth (59) of the throwing rotor (56) penetrate partially into the path of the flails (57) of the conditioning rotor (55).

16. Agricultural machine according to anyone of claims 10 to 15, characterized in that the speed of rotation of the throwing rotor (56) is greater than that of the conditioning rotor (55).

FIG.1

FIG.2

FIG.3

# FIG. 4

FIG. 5